**Europäisches Patentamt**

**European Patent Office**

**Office européen des brevets**

(11) Numéro de publication : **0 319 380 B1**

(12) **FASCICULE DE BREVET EUROPEEN**

(45) Date de publication du fascicule du brevet :
**22.07.92 Bulletin 92/30**

(21) Numéro de dépôt : **88402969.5**

(22) Date de dépôt : **25.11.88**

(51) Int. Cl.⁵ : $F16D\ 65/12$, F16D 69/02,
F16D 55/228, F16D 55/224,
F16D 55/40, B62L 1/00,
B60T 1/06, B60T 11/20

(54) **Dispositif de freinage d'un élément rotatif.**

(30) Priorité : **04.12.87 FR 8716863**

(43) Date de publication de la demande :
**07.06.89 Bulletin 89/23**

(45) Mention de la délivrance du brevet :
**22.07.92 Bulletin 92/30**

(84) Etats contractants désignés :
**DE ES GB IT NL**

(56) Documents cités :
**EP-A- 0 138 345**
**CH-A- 112 448**
**FR-A- 1 052 306**
**FR-A- 1 434 026**
**FR-A- 1 523 402**

(56) Documents cités :
**FR-A- 2 158 866**
**FR-A- 2 588 226**
**FR-A- 2 601 309**
**GB-A- 1 311 785**
**US-A- 2 142 174**
**US-A- 3 856 120**

(73) Titulaire : **ELF FRANCE, Société Anonyme dite:**
**Tour Elf 2 place de la Coupole La Défense 6**
**F-92400 Courbevoie (FR)**

(72) Inventeur : **Trema, Daniel**
**31 rue du 15 Février**
**F-95870 Bezons (FR)**

(74) Mandataire : **Hirsch, Marc-Roger**
**Cabinet Hirsch 34 rue de Bassano**
**F-75008 Paris (FR)**

# Description

La présente invention se rapporte à un dispositif de freinage d'un élément rotatif comportant au moins deux ensembles de freinage distincts constitués chacun d'au moins un disque de frein présentant au moins une piste de friction et d'une garniture de friction associée à chacune desdites pistes, lesdites garnitures étant appliquées auxdites pistes de friction par des pistons de frein d'un étrier de frein, un coefficient de frottement s'appliquant dans la zone de contact lors du freinage entre ladite piste et ladite garniture, les matériaux en contact de friction du premier desdits ensembles, par exemple un métal ferreux pour le disque de frein et un mélange fritté de métaux et de céramique pour la garniture de ce disque, étant tels que le coefficient de friction décroît quand la température de la piste de friction du premier ensemble augmente et les matériaux en contact de friction du deuxième desdits ensembles, par exemple des fibres de carbone pour le disque de frein et pour la garniture de friction associée, étant tels que le coefficient de friction croît quand la température de piste de friction du deuxième ensemble augmente.

Les freins à disques qui présentent un coefficient de frottement beaucoup plus constant et stable que les freins à tambour mais qui nécessitent des puissances d'actionnement plus importantes, sont maintenant utilisées pour presque tous les véhicules susceptibles de rouler à vitesse élevée sur une voie de roulement: voitures de tourisme et de sport, motocyles, véhicules ferroviaires rapides, avions de lignes et de combat, etc. Le seul défaut qui subsiste pour de tels freins réside dans leur plus faible capacité comme frein de parc, ce qui les écarte encore provisoirement de l'utilisation pour les véhicules industriels lourds où le frein de parc joue un rôle important.

Pour les véhicules les plus rapides tels que les voitures et motocycles de compétition qui dépassent la vitesse de 300 km/h et pour le train à grande vitesse (TGV) qui dépasse également en essai cette vitesse, il a été nécessaire d'utiliser de nouveaux matériaux pour les disques de frein et pour les garnitures de friction coopérant avec ces disques. Les voitures et motocycles de compétition ont ainsi été équipées de disques de frein en fibres de carbone coopérant avec des garnitures de friction également en fibres de carbone, tandis que le train à grande vitesse va être équipé de disques en acier inoxydable coopérant avec des garnitures de friction en plots frittés, tout en se réservant d'utiliser plus tard des disques de frein également à base de fibres de carbone.

Un inconvénient des disques de frein en fibres de carbone qui s'est révélé récemment, en particulier sur les motocycles à grande vitesse, et qui se manifestait déjà à un degré moindre sur les voitures de chemin de fer métropolitain (métro) équipées de sabots de frein en bois (bois dur tel que le bois de frêne) frottant sur des roues en acier, est dû au fait que le coefficient de frottement de tels couples de friction (carbone-carbone ou bois-acier) n'est satisfaisant que lorsque la piste de friction est chaude. Cette propriété de friction va plutôt à l'encontre de celles les plus couramment utilisées jusqu'à maintenant (le coefficient de friction du couple de friction le plus anciennement utilisé: sabot de fonte sur roue en acier, diminue fortement quand la vitesse de friction et la température augmentent, ce qui évite les échauffements destructifs et assure un excellent freinage de parc) et ne permet pas l'établissement rapide de la décéleration de freinage maximal admissible. Cette dernière exigence apparemment peu importante pour les avions qui freinent progressivement, se révèle très importante pour les autres applications, notamment pour les motocycles où le transfert de charge sur la roue avant conditionne le contrôle du freinage et dépend essentiellement de la décélération initiale obtenue.

L'un des buts de la présente invention est précisément d'éviter ces difficultés et de faire en sorte qu'il s'établisse, dès l'application du frein, des forces de freinage significatives qui permettent au conducteur du véhicule de réguler la suite de son freinage en bénéficiant d'une bonne information en retour et d'une bonne proportionnalité entre les efforts d'actionnement des freins et les décélérations effectivement obtenues.

On a déjà proposé dans FR-A-2 158 866 un frein à disques qui comprend un empilage d'éléments tournants et fixes alternés et des moyens de commande du frein destinés à amener les éléments tournants et fixes en contact mutuel de friction afin de serrer ledit frein, les surfaces de friction dudit empilage comportant à la fois des paires de friction, les unes en carbone, les autres en une matière autre que le carbone et généralement à base de fer. L'ensemble des éléments tournants et fixes est serré hydrauliquement pour réaliser le couple de freinage requis.

Un tel agencement est utilisé pour réaliser des freins d'aéronefs présentant un coefficient de friction relativement stable même lorsque les éléments de friction en carbone sont imprégnés d'eau, auquel cas le coefficient de friction est très faible de l'ordre de 0,1 à 0,05 si l'eau ruisselle. L'amélioration produite par cet agencement de frein est suffisante pour maîtriser dans les cas les plus critiques le freinage des avions (atterrissage sous une pluie diluvienne par exemple) mais elle se révèle tout à fait insuffisante pour les motocycles où il est nécessaire de disposer d'un frein très modérable à l'engagement du freinage sur un chemin de roulement glissant et, en même temps, d'un freinage puissant qui s'établisse rapidement en ne portant par exemple que sur la roue avant où la quasi totalité de la charge se transfère en cas de freinage violent sur route sèche.

La présente invention vise précisément à satisfaire ces exigences de freinage particulières des motocycles. A cet effet, selon l'invention, les pistons de frein associés aux garnitures de friction de chacun des ensembles de freinage sont distincts et sont reliés à des émetteurs de pression de freinage différents, par exemple des maîtres-cylindres, qui sont actionnés par un organe d'actionnement commun, de telle manière que, pour les faibles efforts d'actionnement, seul le piston de frein du premier ensemble soit soumis à une pression de freinage croissante avec les efforts d'actionnement, jusqu'à une valeur limite de l'effort d'actionnement, au-delà de laquelle lesdits pistons de frein du premier et du deuxième ensembles sont soumis simultanément à des pressions de freinage croissantes.

Selon un autre mode de réalisation permettant de limiter encore mieux l'à-coup de décélération provoqué par l'augmentation brutale du coefficient de frottement du deuxième ensemble, un poussoir d'actionnement du deuxième ensemble coopère avec au moins un ressort de prédominance apte à réduire la pression de freinage du deuxième ensemble par rapport à celle du premier ensemble d'une valeur sensiblement constante.

Selon un mode de réalisation avantageux de l'invention, les pistes de friction du premier ensemble de freinage sont réalisées en fonte et coopèrent avec des garnitures de friction en matériau composite (par exemple, à base d'amiante ou de matière synthétique), donnant un coefficient de frottement stable mais qui diminue rapidement pour des températures élevées de ces pistes de friction, tandis que les pistes de friction du deuxième ensemble sont réalisées en matériau fibreux tel que des fibres de carbone et coopèrent avec des garnitures de friction en un matériau fibreux du même type et dont le coefficient de friction augmente lorsque la température de la piste de friction croît.

Selon un mode de réalisation encore plus performant de l'invention, la piste de friction du premier ensemble est réalisée en un matériau ferreux à haute résistance à chaud tel qu'un acier inoxydable en structure austénitique permanente et coopère avec une garniture de friction en matériau dur tel que du matériau fritté, tandis que la piste de friction du deuxième ensemble est réalisée en un matériau fibreux tel que des fibres de carbone et coopère avec une garniture de friction en un matériau de friction du même type donnant un coefficient de friction qui augmente lorsque la température de la piste de friction croît.

Selon un autre mode de réalisation très compact, les pistes de friction du premier et du deuxième ensemble sont formées sur deux disques, respectivement en matériau ferreux et en matériau fibreux, qui sont entraînés en rotation simultanée par un ensemble de cannelures portées par une couronne cylindrique solidaire en rotation de l'organe rotatif et sont plaqués l'un contre l'autre par l'intermédiaire d'une face annulaire plane à l'intérieur d'un même étrier ou d'une même pince de freinage apte à serrer simultanément une face annulaire du disque en matériau ferreux et une face annulaire du disque en matériau fibreux, de manière que les deux disques soient en situation de contact thermique mutuel. Le disque en matériau ferreux est avantageusement placé dans la position bénéficiant du meilleur refroidissement, c'est-à-dire en général dans celle exposée le plus au vent de la marche du véhicule, de manière à faciliter la conservation de l'échauffement du disque en matériau fibreux tout en limitant la chute du coefficient de friction de l'autre disque en matériau ferreux. Les disques accolés en deux matériaux différents peuvent être disposés en deux couples, serrés chacun par un étrier, pour réaliser des freins à double disques et double étriers comportant, en fait, quatre disques de frein.

Selon un mode de réalisation améliorant la stabilité du véhicule freiné, en particulier d'un motocycle doté d'un frein à disques puissant sur la roue avant, la piste de friction du disque du premier ensemble de freinage (ou les faces annulaires jointives des disques) sont situées sensiblement sur le plan médian de la roue freinée, de manière à réduire les déports de conduite provoqués par l'engagement du processus de freinage qui commence, en général, sur ce disque freinant bien à froid.

Dans le mode de réalisation de l'invention, si l'on utilise pour le premier ensemble de freinage un disque de frein en fonte et des garnitures de friction classiques pour les véhicules automobiles et les motocycles, le coefficient de friction décroît lentement lorsque la température du disque, et donc de la zone de contact, croît, jusqu'à une température dite de transition située généralement entre 350 et 450°C et pour laquelle le coefficient de friction s'effondre rapidement jusqu'à environ la moitié de sa valeur initiale. Lorsque le deuxième ensemble de freinage selon l'invention n'est pas prévu, l'utilisateur a l'impression que les freins"s'évanouissent" sans qu'il ne puisse rétablir le niveau correct des forces freinantes. Dans le dispositif selon l'invention, le deuxième ensemble de freinage s'est échauffé et prend le relais du freinage qui ne décroît pratiquement pas alors que son attaque initiale a pu être à la fois rapide et modérable du fait de la bonne progressivité de l'ensemble classique: disque en fonte ou en acier-garnitures de friction composites.

Les deux disques des deux ensembles distincts présentent sensiblement les mêmes diamètres extérieur et intérieur, mais des épaisseurs différentes et en général, le disque du deuxième ensemble présente la plus forte épaisseur, ce qui permet de compenser le fait qu'il dissipe la plus grande part de l'énergie de freinage et qu'il est réalisé en un matériau relativement tendre.

Selon un autre mode de réalisation visant à privilégier l'obtention rapide de grandes puissances de freinage, le disque du premier ensemble présente une faible épaisseur de l'ordre de 3 à 4mm apte à permettre son échauffement rapide au cours du freinage.

Selon un autre mode de réalisation permettant de mieux utiliser les capacités de freinage et de dissipation thermique différentes des deux disques, les pistons de frein distincts de serrage des garnitures de friction présentent des diamètres différents, le ou les pistons de frein du deuxième ensemble présentant le plus petit diamètre.

D'autres buts, caractéristiques et avantages apparaîtront à la lecture de la description de divers modes de réalisation de l'invention, faite à titre non limitatif et en regard du dessin annexé, où:

– la figure 1 représente, en élévation frontale et en coupe par l'axe du moyeu de roue, un train avant de motocycle utilisant un dispositif de freinage à deux disques selon l'invention;

– la figure 2 est une vue fragmentaire en coupe d'un dispositif de freinage à deux disques différents, respectivement ventilé en fonte et en fibres de carbone et où les disques coopèrent avec un étrier de serrage commun;

– la figure 3 est une vue fragmentaire en coupe d'un train avant de motocycle comportant un dispositif de freinage selon l'invention, à étrier unique et à deux disques de frein distincts accolés;

– la figure 4 est une vue fragmentaire et schématique représentant deux étriers de frein dis tincts du dispositif de freinage à deux disques selon l'invention, ces étriers étant reliés à un maître-cylindre double avec "prédominance" de la pression de l'un des circuits.

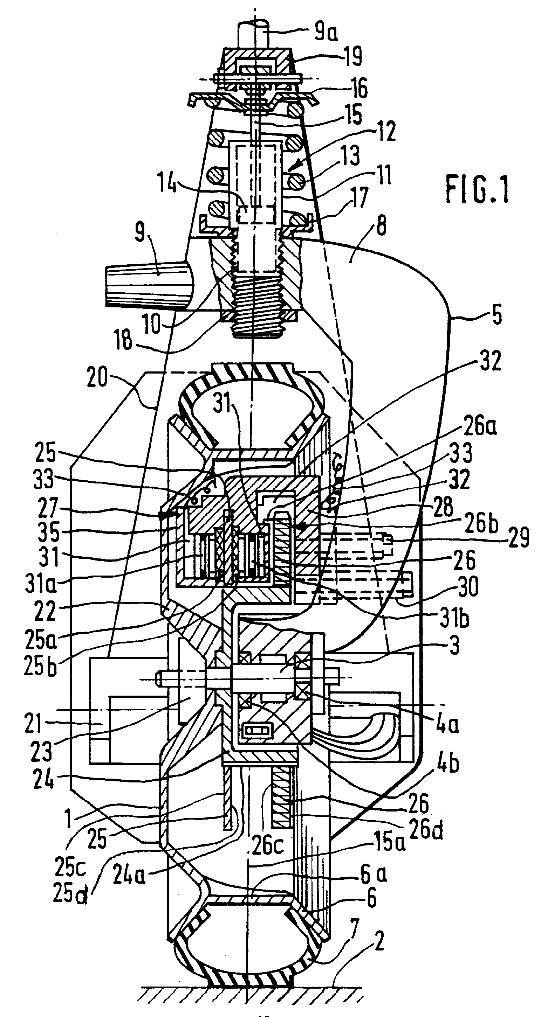

Si l'on se reporte à la figure 1, on voit de face le train avant d'un motocycle, constitué d'une roue avant 1, qui roule sur un chemin de roulement 2, en tournant avec son axe 3 monté sur des roulements à billes 4a et 4b portés par un bras de suspension unique ou jambe de force 5. Le bras unique 5 présente une partie coudée en forme de C qui enveloppe la section de la roue 1 constituée d'une jante 6 à fond 6a et d'un bandage pneumatique 7. La partie supérieure 8 du bras unique 5 présente un ergot 9 de bras de liaison à un guidon de direction 9a et un alésage fileté 10 recevant le corps 11 d'un combiné ressort amortisseur 12 comportant un ressort externe 13 et un piston intérieur d'amortissement 14, mobile dans un alésage du corps et dont la tige 15 est reliée à une plaque supérieure 16 d'appui du ressort 13. L'appui inférieur du ressort 13 est constitué par une coupelle 17 vissée sur le corps 11 pour le maintenir en position sur la partie supérieure 8 du bras unique, en coopération avec un anneau inférieur vissé de blocage 18. La plaque supérieure d'appui 16 est reliée au bec avant 19 du châssis 20 du motocycle supportant le bloc moteur-transmission 21 et également le poids du conducteur et des passagers éventuels du motocycle. En ligne droite, l'axe de la tige 15 se trouve placé sensiblement dans le plan médian ou plan de roulement 15a du bandage pneumatique 7.

Le moyeu 22 de la roue 1 est serré par un écrou 23 sur l'axe 3 et est rendu solidaire en rotation d'un tambour 24 de support de disques de frein. Le tambour 24 est muni à sa périphérie de cannelures 24a sur lesquelles glissent axialement les cannelures conjuguées de deux disques de frein 25 et 26 qui sont, en fait, maintenus axialement en position par le contact avec les garnitures de friction qui coopèrent avec les pistes de friction de ces disques (pistes 25c, 25d du disque 25 et, respectivement, 26c, 26d du disque 26).

Les garnitures de friction 25a et 25b du disque 25 sont portées par un étrier de frein à disque 27 fixé sur une pièce intermédiaire ou de liaison 28, elle-même fixée sur des bossages 29, 30 du bras 5. L'étrier 27 comporte des pistons de frein respectifs 31a et 31b mobiles, de façon étanche, dans un alésage et soumis, au cours du freinage, à une pression hydraulique pour repousser les garnitures de friction 25a et 25b au contact des pistes de friction du disque 25.

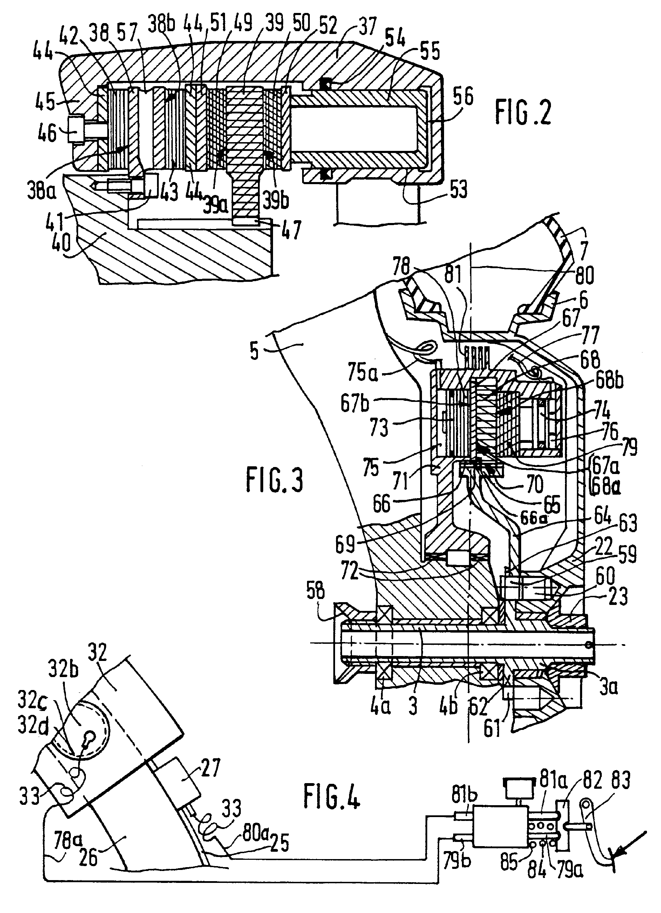

Le disque de frein 26 qui constitue un deuxième disque de frein situé du côté opposé au voile de la roue 1, coopère avec un deuxième étrier de frein à disques 32 représenté uniquement en vue extérieure (et qui comporte des pistons 32c et 32d non représentés ici mais figurés en pointillés sur la figure 4 . Dans le mode de réalisation représenté à la figure 1, le deuxième étrier de frein 32 porte des garnitures de friction 26a et 26b et ne se trouve pas dans le plan de coupe. L'étrier 32 est assemblé et fixé à un prolongement de la pièce de liaison 28 et son plan moyen est décalé par rapport au plan moyen de l'étrier 27 pour tenir compte du décalage du plan du disque 26 par rapport à celui du disque 25.

Selon le mode de réalisation de l'invention représenté à la figure 1, le disque de frein 25 est réalisé en fonte pour disque de frein, par exemple en fonte à perlite lamellaire, pour constituer une rondelle de faible épaisseur, 3 à 4 mm par exemple, munie de cannelures intérieures lui permettant de se déplacer axialement sur les cannelures conjuguées 24a du tambour 24 tout en étant entraînée en rotation par le tambour 24. Les garnitures de friction 25a et 25b qui coopèrent avec le disque 25 sont réalisées en matériau de friction composite relativement tendre, par exemple à base d'amiante, dont le coefficient de frottement s'effondre (passant par exemple de 0,4 à 0,2) lorsque le disque 25 dépasse une température de l'ordre de 400°C, dénommée par l'homme de l'art température de transition. Ces garnitures de friction présentent, par contre, à froid et jusqu'à des températures de 250 à 300°C, un coefficient de frottement très stable et peu sensible à la présence d'eau sur les pistes de friction du disque.

Le disque 26 est réalisé, lui, en un matériau fibreux, par exemple à base de fibres de carbone, et présente une épaisseur plus importante que le disque 25, par exemple de l'ordre de 10 à 15 mm tout en présentant une structure massive ou ventilée. Cette épaisseur plus importante est utile pour transmettre les couples de friction aux cannelures 24a du tambour 24 car les cannelures intérieures du matériau fibreux sont plus fragiles que celles de la fonte. L'épaisseur plus importante du disque 26 correspond également à une sollicitation thermique plus grande de ce disque et à une plus grande usure de sa surface de friction. Les garnitures de friction 26a et 26b qui coopèrent avec le disque 26 sont réalisées également en un matériau à base de fibres de carbone. Le couple de friction constitué par un disque en fibres de carbone et des garnitures en fibres de carbone présente un coefficient de friction faible à froid et qui croît quand la température de la zone de contact augmente. Le comportement d'un tel couple de friction s'apparente à celui déjà signalé précédemment et qui est constitué par des sabots de frein en bois dur, tel que du frêne, frottant sur des roues en acier et dont le coefficient de friction diminue lorsque la vitesse décroît, le couple de friction carbone-carbone subissant néanmoins une augmentation beaucoup plus brutale du coefficient de frottement.

Le fonctionnement du dispositif de freinage représenté à la figure 1 va maintenant être explicité. Lorsque le conducteur du motocycle freine modérément, les étriers de frein 27 et 32 sont serrés simultanément, par exemple par des maîtres cylindres doubles non représentés et reliés par des flexibles tels que le flexible 33 aux chambres hydrauliques 31 délimitées par les pistons de frein 31a et 31b. Le coefficient de frottement entre le disque 25 et les garnitures de friction 25a et 25b est alors maximal et stable, tandis que le coefficient de frottement entre le disque 26 et les garnitures 26a et 26b est faible et croissant avec la température. La plus grande partie du couple de freinage est fournie par le disque 25 qui s'échauffe modérément (150°C environ) et qui assure un freinage très modérable et très sensible à l'action de desserrage du conducteur, ce qui est important pour éviter le blocage de la roue avant sur route mouillée et/ou glissante.

Si le freinage modéré se poursuit, par exemple dans une descente en montagne, le disque 26 en fibres de carbone finit par s'échauffer et des forces frottantes plus importantes se développent brutalement sur ce disque. Le conducteur du motocycle en est averti aussitôt avant blocage des roues et diminue son effort de commande de freinage en conséquence, la puissance de freinage se transférant, du disque 25 relativement échauffé, au disque 26 apte à supporter des températures très importantes pouvant dépasser 600°C.

Lorsque le conducteur à besoin de freiner violemment (le cas le plus critique étant par exemple, en course, le freinage en fin de ligne droite sur route sèche, à partir d'une vitesse très élevée pouvant atteindre 300 km/h), il actionne brutalement et simultanément le serrage des étriers 27 et 32. Le premier engagement du frein se produit essentiellement sur le disque 25 alors froid et qui supporte environ les trois quarts du couple de freinage pendant que le disque 26 s'échauffe rapidement en surface du fait de la faible conductibilité thermique du matériau à base de fibres de carbone. Le disque 25 qui présente une meilleure conductibilité s'échauffe très rapidement du fait de sa faible épaisseur et sa température de surface dépasse, après un temps très bref de l'ordre de 2 secondes, la température de transition du coefficient de friction située entre 350 et 450°C, ce qui diminue le coefficient de frottement quelquefois de plus de moitié. A ce moment, le freinage devrait faire apparaître des signes de défaillance, mais du fait de l'échauffement superficiel très rapide du disque 26, le coefficient de frottement de ce disque avec les garnitures 26a et 26b croît considérablement jusqu'à équilibrer presque l'effondrement du coefficient de frottement sur le disque 25. Le freinage qui était au début supporté aux trois quarts par le disque en fonte 25 est alors supporté pour la plus grande partie par le disque 26 en fibres de carbone qui présente une très grande résistance thermique. Le coefficient de frottement carbone-carbone étant plus élevé que celui du couple fonte-garniture classique, les pistons de l'étrier de frein 32 peuvent présenter un plus faible diamètre que ceux de l'étrier 27. Dès le relâchement des freins, le disque en fonte 25 se refroidit rapidement du fait de sa faible épaisseur et il est prêt, après quelques secondes de roulage libre, à assurer à nouveau l'engagement très modérable du freinage pendant la phase délicate du travail des suspensions (mouvement de salut au freinage).

Dans le mode de réalisation représenté à la figure 2 et qui peut, par exemple, être appliqué à une voiture de tourisme, on utilise un seul étrier de frein 37 pour serrer deux disques de frein 38 et 39 qui sont rendus solidaires, au moins en rotation, d'un moyeu de roue 40. Le disque 38 réalisé par exemple en fonte moulée avec des canaux 57 de ventilation axiale, est fixé à sa base par une couronne de vis 41 au moyeu de roue 40. Le disque ventilé 38 coopère avec des garnitures de friction relativement tendres 42 et 43 en matière composite (à base de matière plastique) fixées sur une embase de support en tôle 44. L'embase 44 la plus extérieure est accrochée à la corne extérieure 45 de l'étrier 37 par une vis 46.

Le deuxième disque 39 est réalisé en un matériau fibreux, à base de fibres de carbone par exemple et présente des cannelures intérieures 47 qui viennent s'engager sur des cannelures extérieures ménagées sur le moyeu de roue 40. Les deux surfaces de friction latérales du disque 39 coopèrent avec des garnitures de friction 49 et 50 en matériau fibreux du même type que le disque et portées également par des plaquettes de tôle 51 et 52.

L'étrier de frein 37 comporte un alésage intérieur 53 dans lequel se déplace, de façon étanche grâce à un joint annulaire 54, un piston de frein 55 relativement long pour assurer le serrage simultané des deux disques. Le piston 55 délimite avec l'étrier 37 une chambre hydraulique 56 qui est reliée à un émetteur de pression hydraulique de freinage non représenté.

Au cours du freinage avec le dispositif représenté à la figure 2, la mise sous pression de la chambre hydraulique 56 repousse le piston 55 vers la gauche de la figure et l'étrier 37 vers la droite, ce qui provoque le serrage simultané des disques 38 et 39 par les garnitures de friction correspondantes. Au début du freinage, les disques 38 et 39 sont froids et seules les pistes de friction 38a et 38b du disque 38 présentent un coefficient de frottement important de l'ordre de 0,4 alors que le coefficient de friction des pistes 39a et 39b du disque 39 ne présente qu'un coefficient de friction faible de l'ordre de 0,1. Grâce aux canaux de ventilation 57 du disque 38, l'échauffement de celui-ci reste limité à des valeurs inférieurs à 350°C et le coefficient de friction du disque 38 reste stable. Pendant un freinage de longue durée, par exemple au cours d'une longue descente, le disque 39 s'échauffe suffisamment pour que son coefficient de friction augmente jusqu'à des valeurs significatives de l'ordre de 0,4, alors que l'échauffement du disque ventilé 38 devient exagéré, ce qui provoque une diminution sensible de son coefficient de frottement. La puissance de freinage se transfère ainsi du disque ventilé 38 vers le disque en fibres de carbone 39 plus résistant à l'échauffement.

En cas de freinage brutal, les surfaces de friction 38a et 38b du disque ventilé s'échauffent rapidement avant qu'un transfert thermique ne puisse s'établir par la ventilation et le coefficient de friction du disque 38 diminue au moment où celui du disque 39 augmente brutalement, par suite de l'échauffement de la surface de celui-ci qui prend alors le relais du freinage. Le conducteur du véhicule a pu bénéficier de la stabilité et de la progressivité du couple de friction fonte-garniture composite 38, 42, 43, et régler l'intensité de son freinage avant de dépendre, pour l'achèvement du freinage, du couple carbone-carbone 39, 49, 50 qui présente une zone d'instabilité du coefficient de frottement autour de 400°C, mais garantit, au-delà de cette zone de température, un coefficient de frottement stable et élevé. Pour certaines utilisations, on peut prévoir que le disque 39 en fibres de carbone présente une épaisseur nettement plus faible que le disque 38 en fonte, ce qui favorise son échauffement rapide. L'échange du disque 39 peut alors être prévu systématiquement à chaque changement des garnitures de friction.

Le train avant de motocycle représenté de façon fragmentaire et en coupe à la figure 3 comporte des éléments qui se retrouvent dans le dispositif représenté à la figure 1 et qui portent les mêmes repères de référence, notamment un bras de suspension unique 5 qui porte, par l'intermédiaire de roulements à billes ou à rouleaux 4a et 4b, un axe tubulaire rotatif 3 serré sur le roulement 4a par un écrou 58. Le moyeu 22 d'une roue 1 qui présente une jante 6 sur laquelle est monté un bandage pneumatique 7, est serré sur une partie renforcée 3a de l'axe rotatif 3 par un écrou 23 de manière à réaliser un couplage en rotation entre, d'une part les têtes 59 de vis 60 vissées dans le moyeu 22 en alliage léger et, d'autre part, les dentures 61 d'un flasque 62 solidaire de l'axe tubulaire 3. Les têtes 59 des vis 60 sont couplées également par l'intermédiaire de rondelles intégrées 63 à un flasque rigide 64 en forme de cloche et qui supporte, par une couronne cylindrique 65 munie de cannelures externes 66, deux disques de frein 67 et 68.

Les disques de frein 67 et 68 sont montés dos à dos, accolés par leurs faces planes respectives 67a et 68a et coulissent axialement par leurs cannelures intérieures 69 et 70 sur les cannelures 66 de la couronne 65. Le disque 67 réalisé en matériau ferreux rigide tel que l'acier inoxydable est, de préférence, retenu axialement en butée, à l'encontre de l'action prépondérante du piston de frein 73, par un anneau élastique de butée 66a engagé par serrage élastique dans une rainure circonférentielle correspondante ménagée transversalement aux cannelures 66 sur la couronne 65. Les disques 67 et 68 sont chevauchés par un étrier de frein unique 71 qui est monté rotatif par des roulements à aiguilles 72 sur le bras unique de suspension 5 et qui est empêché de tourner par une biellette de retenue non représentée.

L'étrier 71 présente, ici, deux alésages d'axe perpendiculaire à la surface de friction des disques 67 et 68 et dans chacun desquels se déplace, de façon étanche, un piston de frein respectif 73, 74. Les chambres de pression respectives 75 et 76 délimitées à l'intérieur de l'étrier par les pistons 73 et 74 sont reliées par des conduites flexibles 75a et 77 à un émetteur de pression hydraulique de freinage tel qu'un maître-cylindre de frein simple ou double. Le piston 73 repousse une garniture de freinage 78, composite à base d'amiante ou de matériau de friction fritté, au contact de la piste de friction 67b du disque 67 réalisé en couche mince de l'ordre de 3 à 4 mm et en un matériau à haute résistance à l'échauffement tel que l'acier inoxydable pour frein qui ne présente pas de point gamma de transition physico-chimique au cours de l'échauffement (structure auténitique permanente). Le piston 74 qui présente un diamètre plus faible que le piston 73 repousse une garniture de friction 79 en matériau fibreux à base de fibres de carbone au contact de la face ou piste de friction 68b du disque 68 réalisé également à base de fibres de carbone en une épaisseur plus importante que le disque 67 et de l'ordre de 20 mm.

Les faces jointives 67a et 68a des disques 67 et 68 sont disposées sensiblement dans le plan médian 80 du bandage pneumatique 7, c'est-à-dire dans le plan médian de roulement de la roue 1, ce qui a pour effet de rendre la surface ou piste de friction 67b du disque 67 plus proche de ce plan médian 80 que la surface ou piste de friction 68b du disque 68. Afin de limiter l'échauffement des parties de l'étrier 71 voisines des disques 67 et 68 et donc l'échauffement du liquide de frein contenu dans les chambres hydrauliques 75 et 76, qui pourrait alors bouillir tandis que ces chambres perdraient leur étanchéité, des nervures de refroidissement 81 sont prévues à la périphérie de l'étrier 71. Il est possible, selon certains modes de réalisation, de rendre les disques 67 et 68 solidaires, par exemple par collage, mais le mode de réalisation préféré consiste à laisser ces disques de frein séparés afin de leur permettre de se dilater de façon différentielle et d'autoriser le changement de l'un des disques, indépendamment de l'autre.

Lorsque le frein selon l'invention représenté à la figure 3 est actionné modérément à partir de l'état froid des garnitures de friction et des disques, seul le coefficient de friction entre la garniture de friction 78 et la face 67b est significatif (de l'ordre de 0,4 à 0,5), le coefficient de friction initial entre la garniture 79 et la face 68b étant initialement faible (de l'ordre de 0,1). Le disque 67 fournit alors l'essentiel des forces freinantes et s'échauffe rapidement jusqu'à un point d'équilibre où il cède sa chaleur partiellement à l'air ambiant et partiellement au disque 68 en fibres de carbone.

Si le freinage modéré se prolonge, par exemple dans une longue descente, la température de la face 67b du disque 67 dépasse la température limite pour laquelle le coefficient de friction de la garniture frittée 78 commence à diminuer. A ce moment, le couple de friction disque en fibres de carbone 68-garnitures en fibres de carbone 79 s'est déjà échauffé jusqu'à la température de transition et a pris le relais, ce qui a normalement conduit le conducteur à réduire légèrement son effort de commande de freinage.

En cas de freinage brutal et à grande vitesse, le couple de friction garnitures 78-face 67b fournit un couple de freinage suffisant pendant le temps bref nécessaire à l'échauffement superficiel de la face 68b du disque 68 qui prend, ensuite, le relais du couple de freinage. L'échauffement brutal du disque en acier 67 est limité par la masse du disque 68 qui forme alors un puits de chaleur.

En fonction de l'expérience en service et du type d'emploi du véhicule sur lequel est monté le dispositif de freinage à deux disques selon l'invention, il est possible de choisir des rapports entre les diamètres des pistons 73 et 74 qui permettent d'obtenir:

– soit un bon relais entre les couples de friction au cours d'un freinage violent;

– soit une usure bien répartie et proportionnée des garnitures de friction 78 et 79 et des surfaces de friction 67b et 68b des disques.

A la figure 4, on a représenté de façon fragmentaire l'étrier 32 de serrage du disque de frein en matériau fibreux 26 de la figure 1, ainsi que l'étrier 27 de serrage du disque 25 en fonte. Les cylindres 32b de l'étrier 32 (on ne voit qu'un seul cylindre mais on a représenté en pointillés les deux pistons alignés 32c, 32d des cylindres 32b) sont relié par une canalisation 78a à un maître-cylindre 79b tandis que les cylindres (non représentés) de l'étrier 27 sont reliés par une canalisation 80a à un maître-cylindre 81b. Les poussoirs 79a et 81a des maîtres-cylindres 79b et 81b sont actionnés en parallèle par un balancier commun 82 relié mécaniquement à une pédale de frein unique 83. Conformément à un mode de réalisation de l'invention, un ressort de "prédominance" 84 (normalement précontraint) est interposé autour du poussoir 79a entre le balancier 82 et un rebord d'appui 85 du maître-cylindre 79b.

Lorsque le conducteur actionne les freins du motocycle en appuyant sur la pédale 83 avec une force modérée, la force de réaction du ressort 84 s'oppose à l'actionnement du poussoir 79a et seuls les cylindres de frein de l'étrier 27 sont soumis à une pression de freinage. Le freinage faible qui doit, dans certains cas (par exemple sur sol glissant et/ou mouillé et/ou en courbe), être très modérable et très stable, s'exerce ainsi sur le seul disque en fonte 25.

Si le conducteur augmente la pression sur la pédale 83, il dépasse la force de réaction du ressort 84 et le cylindre de frein 32b (de l'étrier 32 du disque 26 en matériau fibreux) commence à recevoir une pression de freinage. Du fait de la force de réaction quasi constante du ressort précontraint 84, la pression de freinage qui s'exerce sur le disque en fibres de carbone 26 présente un retard permanent sur la pression qui s'exerce sur le disque en fonte 25. Pour fixer les idées à titre d'exemple, si la pression hydraulique maximale de freinage qui s'exerce sur le disque en fonte 25 est par exemple de 100 bars, le retard de pression provoqué par le ressort précontraint 84 est par exemple de l'ordre de 20 bars. En d'autre termes, et selon le langage de l'homme de l'art, le circuit 80a de freinage du disque en fonte 25 présente une "prédominance" quasi constante de 20 bars et la pression maximale de freinage appliquée au disque 26 ne pourra pas dépasser 80 bars.

Pendant un freinage de longue durée, par exemple en descente, le disque de frein 26 finit par s'échauffer jusqu'au delà de la température de transition où son coefficient de frottement augmente brutalement. L'augmentation de la décélération du motocycle est cependant limitée par le fait que la pression de freinage qui s'exerce sur le disque 26 est plus faible que celle qui s'exerce sur le disque en fonte 25.

En cas de freinage brutal avec le dispositif de freinage représenté à la figure 4, la température du disque de frein en fonte 25 soumis à la pression de freinage maximale augmente rapidement, de même que celle du disque 26 qui présente une épaisseur plus importante mais une conductibilité plus faible que celle du disque 25. L'augmentation brutale du coefficient de frottement du disque en matériau fibreux 26 se produit généralement pendant la phase de décroissance rapide du coefficient de frottement du disque en fonte et la variation de taux de décélération du motocycle provoquée par cette hausse brutale du coefficient de frottement est atténuée du fait de la pression de freinage plus faible appliquée à ce disque 26.

Le circuit de freinage représenté à la figure 4 peut, bien entendu, être appliqué au dispositif de freinage à deux disques distincts représenté à la figure 3, les chambres hydrauliques 76 et 75 étant reliées respectivement aux canalisations de frein 78a et 80a. On constate que dans ce mode de réalisation, du fait que le piston 74 agissant sur le disque en matériau fibreux 68 présente un diamètre plus faible que le piston 73 agissant sur le disque 67 en acier inoxydable, la variation de décélération provoquée par le passage de la température de transition des fibres de carbone est encore atténuée. Au cours des freinages à faible pression n'agissant pas sur le piston de frein 74, le disque 68 en matériau fibreux subit un échauffement par contact avec le disque mince 67 et fonctionne ainsi en puits de chaleur à l'égard de ce disque mince.

Dans les divers modes de réalisation de l'invention, l'utilisateur du frein, c'est-à-dire le conducteur du véhicule, a toujours constaté que la combinaison d'un disque de frein en métal ferreux avec un disque de frein en matériau fibreux à haute résistance à chaud, tend à stabiliser le coefficient de friction moyen efficace obtenu en fonction de l'effort d'actionnement des freins (en principe proportionnel à l'effort musculaire de commande développé par le conducteur) par rapport à une solution à deux disques en matériau fibreux où le coefficient de frottement est faible à froid et monte brutalement de 0,15 à 0,5 pour un très faible échauffement supplémentaire des surfaces de friction, par suite du passage par une température de transition au voisinage de 400-450°C qui change complètement la nature du frottement.

La conduite des motocycles exige que les freins présentent une grande stabilité du coefficient de frottement afin de permettre le freinage en courbe où une augmentation brutale de la décélération déstabilise irrémédiablement le motocycle. L'application de la présente invention a été décrite ici principalement en relation avec les motocycles à grande vitesse, mais il est évident qu'elle peut s'appliquer à tous les véhicules roulants, notamment aux automobiles et aux systèmes de freinage à disques multiples tels qu'utilisés sur les aéronefs.

**Revendications**

1. Dispositif de freinage d'un élément rotatif comportant au moins deux ensembles de freinage distincts constitués chacun d'au moins un disque de frein (25, 26; 67, 68) présentant au moins une piste de friction (25c, 25d; 26c, 26d; 67b; 68b) et d'une garniture de friction (25a, 25b; 26a, 26b; 78, 79) associée à chacune desdites pistes, lesdites garnitures étant appliquées auxdites pistes de friction par des pistons de frein (31a, 31b; 32c, 32d; 73, 74) d'un étrier de frein (27, 32; 71), un coefficient de frottement s'appliquant dans la zone de contact lors du freinage entre ladite piste et ladite garniture, les matériaux en contact de friction du premier (25, 25a, 25b; 67, 78) desdits ensembles, par exemple un métal ferreux pour le disque de frein et un mélange fritté de métaux et de céramique pour la garniture de ce disque, étant tels que le coefficient de friction décroît quand la température de la piste de friction (25c, 25d; 67b) du premier ensemble augmente et les matériaux en contact de friction du deuxième (26, 26a, 26b; 68, 79) desdits ensembles, par exemple des fibres de carbone pour le disque de frein et pour la garniture de friction associée, étant tels que le coefficient de friction croît quand la température de piste de friction (26c, 26d; 68b) du deuxième ensemble augmente, caractérisé en ce que les pistons de frein (31a, 31b; 32c, 32d; 73, 74) associés aux garnitures de friction (25a, 25b, 26a, 26b; 78, 79) de chacun des ensembles de freinage sont distincts et sont reliés à des émetteurs de pression de freinage différents, par exemple des maîtres-cylindres (81b, 79b), qui sont actionnés par un organe d'actionnement commun (82, 83), de telle manière que, pour les faibles efforts d'actionnement, seul le piston de frein (31a, 31b; 73) du premier ensemble soit soumis à une pression de freinage croissante avec les efforts d'actionnement, jusqu'à une valeur limite de l'effort d'actionnement, au-delà de laquelle lesdits pistons de frein du premier et du deuxième ensembles sont soumis simultanément à des pressions de freinage croissantes.

2. Dispositif de freinage selon la revendication 1, caractérisé en ce qu'un poussoir d'actionnement (79a) du deuxième ensemble coopère avec au moins un ressort de prédominance (84) apte à réduire la pression de freinage du deuxième ensemble par rapport à celle du premier ensemble d'une valeur sensiblement constante.

3. Dispositif de freinage selon les revendications 1 et 2, caractérisé en ce que les pistes de friction (25c, 25d) du premier ensemble de freinage sont réalisées en fonte et coopère avec des garnitures de friction (25a, 25b) en matériau composite, par exemple à base d'amiante ou de matière synthétique, donnant un coefficient de frottement stable mais qui diminue rapidement pour des températures élevées de ces pistes de friction, tandis que les pistes de friction du deuxième ensemble sont réalisées en un matériau fibreux tel que des fibres de carbone et coopèrent avec des garnitures de friction (26a, 26b) en un matériau fibreux du même type et dont le coefficient de friction augmente lorsque la température de la piste de friction croît.

4. Dispositif de freinage selon les revendications 1 et 2, caractérisé en ce que la piste de friction (67b) du premier ensemble est réalisée en un matériau ferreux à haute résistance à chaud tel qu'un acier inoxydable en structure austénitique permanente et coopère avec une garniture de friction (78) en matériau dur tel que du matériau fritté, tandis que la piste de friction (68b) du deuxième ensemble est réalisée en un matériau fibreux tel que des fibres de carbone et coopère avec une garniture de friction (79) en un matériau de friction du même type donnant un coefficient de friction qui augmente lorsque la température de la piste de friction croit.

5. Dispositif de freinage selon les revendications 3 et 4, caractérisé en ce que les pistes de friction du premier et du deuxième ensembles sont formées sur deux disques (67, 68), respectivement en matériau ferreux et en matériau fibreux, qui sont entraînés en rotation simultanée par un même ensemble de cannelures portées par une couronne cylindrique (65) solidaire en rotation de l'organe rotatif (1) et sont plaqués l'un contre l'autre par l'intermédiaire d'une face annulaire plane (67a, 68a) à l'intérieur d'un même étrier (71) ou d'une même pince de freinage apte à serrer simultanément une face annulaire (67b) du disque en matériau ferreux et une face annulaire (68b) du disque en matériau fibreux, de manière que les deux disques soient en situation de contact thermique mutuel.

6. Dispositif de freinage selon la revendication 5, caractérisé en ce que le disque en matériau ferreux (67) est placé dans la position bénéficiant du meilleur refroidissement.

7. Dispositif de freinage selon les revendications 5 et 6, appliqué au freinage d'une roue de motocycle, caractérisé en ce que les faces annulaires jointives (67a, 68a) des disques (67, 68) sont disposées sensiblement dans le plan médian (80) de la roue freinée (1).

8. Dispositif de freinage selon la revendications 5 ou 6 appliqué au freinage d'une roue de motocycle, caractérisé en ce que la piste de friction (67b) du disque (67) du premier ensemble de freinage est située sensiblement sur le plan médian (80) de la roue freinée (1).

9. Dispositif de freinage selon les revendications 5 à 8, dans lequel les deux disques (67, 68) des deux ensembles distincts présentent sensiblement les mêmes diamètres extérieurs et intérieurs mais des épaisseurs différentes, caractérisé en ce que le disque (68) du deuxième ensemble présente la plus forte épaisseur.

10. Dispositif selon la revendication 9, caractérisé en ce que le disque (67) du premier ensemble présente une faible épaisseur de l'ordre de 3 à 4mm apte à permettre son échauffement rapide au cours du freinage.

11. Dispositif de freinage selon les revendications 1 à 10, caractérisé en ce que les pistons de frein distincts (31a, 31b; 32c, 32d;73, 74) de serrage des garnitures de friction (25a, 25b; 26a, 26b; 78, 79) présentent des diamètres différents.

12. Dispositif de freinage selon la revendication 11, caractérisé en ce que le ou les pistons de frein (32c, 32d; 74) du deuxième ensemble présentent le plus petit diamètre.

## Patentansprüche

1. Bremsvorrichtung für ein rotierendes Element mit wenigstens zwei verschiedenen Bremsanordnungen, von denen jede von wenigstens einer Bremsscheibe (25, 26; 67, 68), die wenigstens eine Reibbahn (25c, 25d; 26c, 26d; 67b; 68b) aufweist, und von einem Reibbelag (25a, 25b; 26a, 26b; 78, 79) gebildet wird, der jeder der Bahnen zugeordnet ist, wobei die Beläge durch Bremskolben (31a, 31b; 32c, 32d; 73, 74) eines Bremssattels (27, 32; 71) auf die Reibbahnen aufgebracht werden, wobei in dem Kontaktbereich bei der Bremsung zwischen der Bahn und dem Belag ein Reibungskoeffizient gilt, wobei die Reibungskontaktmaterialien der ersten (2.5, 25a, 25b; 67, 78) Anordnung, zum Beispiel ein Eisenmetall für die Bremsscheibe und ein gesintertes Gemisch aus Metallen und Keramik für den Belag dieser Scheibe, von solcher Art sind, daß der Reibungskoeffizient abnimmt, wenn die Temperatur der Reibbahn (25c, 25d; 67b) der ersten Anordnung an steigt, und wobei die Reibungskontaktmaterialien der zweiten (26, 26a, 26b; 68, 79) Anordnung, zum Beispiel Kohlen stoffasern für die Bremsscheibe und den zugeordneten Reibbelag, von solcher Art sind, daß der Reibungs koeffizient zunimmt, wenn die Temperatur der Reibbahn (26c, 26d; 68b) der zweiten Anordnung ansteigt, dadurch gekennzeichnet, daß die Bremskolben (31a, 31b; 32c, 32d; 73, 74), die den Reibbelägen (25a, 25b; 26a, 26b; 78, 79) jeder der Bremsanordnungen zugeordnet sind, verschieden und mit unterschiedlichen Bremsdruckgebern, zum Beispiel mit Hauptzylindern (81b, 79b), verbunden sind, die durch eine gemeinsame Betätigungseinrichtung (82, 83) so betätigt werden, daß für geringe Betätigungskräfte allein der Bremskolben (31a, 31b; 73) der ersten Anordnung einem mit den Betätigungskräften wachsenden Bremsdruck bis zu einem Grenzwert für die Betätigungskraft unterworfen sind, über welchen hinaus die Bremskolben der ersten und der zweiten Anordnung gleichzeitig wachsenden Bremsdrücken unterworfen sind.

2. Bremsvorrichtung nach Anspruch 1, dadurch gekennzeichnet, daß ein Betätigungsstößel (79a) der zweiten Anordnung mit wenigstens einer Hauptfeder (84) zusammenwirkt, die geeignet ist, den Bremsdruck der zweiten Anordnung bezüglich dem der ersten Anordnung um einen im wesentlichen konstanten Wert zu verringern.

3. Bremsvorrichtung nach den Ansprüchen 1 und 2, dadurch gekennzeichnet, daß die Reibbahnen (25c, 25d) der ersten Bremsanordnung aus Gußeisen hergestellt sind und mit Reibbelägen (25a, 25b) aus Verbundwerkstoff, zum Beispiel auf Asbestbasis oder auf Basis einer synthetischen Materials, zusammenwirken, was einen stabilen Reibungskoeffizienten ergibt, welcher aber für erhöhte Temperaturen dieser Reibbahnen schnell abnimmt, während die Reibbahnen der zweiten Anordnung aus einem Fasermaterial, wie Kohlenstoffasern, hergestellt sind und mit Reibbelägen (26a, 26b) aus einem Fasermaterial des gleichen Typs zusammenwirken, deren Reibungskoeffizient zunimmt, wenn die Temperatur der Reibbahn ansteigt.

4. Bremsvorrichtung nach den Ansprüchen 1 und 2, dadurch gekennzeichnet, daß die Reibbahn (67b) der ersten Anordnung aus einem Eisenmaterial mit hoher Wärmebeständigkeit, wie einem nicht rostenden Stahl mit permanenter austenitischer Struktur, hergestellt ist und mit einem Reibbelag (78) aus hartem Material, wie gesintertem Material, zusammenwirkt, während die Reibbahn (68b) der zweiten Anordnung aus einem Fasermaterial, wie Kohlenstoffasern, hergestellt ist und mit einem Reibbelag (79) aus einem Reibungsmaterial des gleichen Typs zusammenwirkt, was einen Reibungskoeffizienten ergibt, der zunimmt, wenn die Temperatur der Reibbahn ansteigt.

5. Bremsvorrichtung nach den Ansprüchen 3 und 4, dadurch gekennzeichnet, daß die Reibbahnen der ersten und der zweiten Anordnung auf zwei aus Eisenmaterial bzw. Fasermaterial bestehenden Scheiben (67, 68) ausgebildet sind, die in gleichzeitige Drehung durch eine gleiche Anordnung von Nuten versetzt werden, welche von einem drehfest mit der drehenden Einrichtung verbundenen, zylindrischen Kranz (65) getragen werden, und die über eine ebene Ringfläche (67a, 68a) im Inneren eines gleichen Sattels (71) oder einer gleichen Bremszange gegeneinander gedrückt werden, die geeignet ist, gleichzeitig eine ringförmige Fläche (67b) der Scheibe aus Eisenmaterial und eine ringförmige Fläche (68b) der Scheibe aus Fasermaterial so gegeneinander zu pressen, daß sich die zwei Scheiben in gegenseitigem thermischen Kontakt befinden.

6. Bremsvorrichtung nach Anspruch 5, dadurch gekennzeichnet, daß die Scheibe (67) aus Eisenmaterial in der Position plaziert wird, die von der besseren Kühlung profitiert.

7. Bremsvorrichtung nach den Ansprüchen 5 und 6, für die Verwendung zum Bremsen eines Motorradrades, dadurch gekennzeichnet, daß die aneinanderstoßenden Ringflächen (67a, 68a) der Scheiben (67, 68) im wesentlichen in der Mittelebene (80) des gebremsten Rades (1) angeordnet sind.

8. Bremsvorrichtung nach Anspruch 5 oder 6, für die Verwendung zum Bremsen eines Motorradrades, dadurch gekennzeichnet, daß sich die Reibbahn (67b) der Scheibe (67) der ersten Bremsanordnung im wesentlichen auf der Mittelebene (80) des gebremsten Rades (1) befindet.

9. Bremsvorrichtung nach den Ansprüchen 5 bis 8, bei welcher die zwei Scheiben (67, 68) der zwei verschiedenen Anordnungen im wesentlichen die gleichen Außen- und Innendurchmesser, aber unterschiedliche Dicken aufweisen, dadurch gekennzeichnet, daß die Scheibe (68) der zweiten Anordnung die größte Dicke aufweist.

10. Bremsvorrichtung nach Anspruch 9, dadurch gekennzeichnet, daß die Scheibe (67) der ersten Anordnung eine geringe Dicke in der Größenordnung von 3 bis 4 mm aufweist, die geeignet ist, ihre schnelle Erwärmung im Laufe der Bremsung zu ermöglichen.

11. Bremsvorrichtung nach den Ansprüchen 1 bis 10, dadurch gekennzeichnet, daß die verschiedenen Bremskolben (31a, 31b; 32c, 32d; 73, 74) zum Anpressen der Reibbeläge (25a, 25b; 26a, 26b; 78, 79) unterschiedliche Durchmesser aufweisen.

12. Bremsvorrichtung nach dem Anspruch 11, dadurch gekennzeichnet, daß der oder die Bremskolben (32c, 32d; 74) der zweiten Anordnung den kleinsten Durchmesser aufweist bzw. aufweisen.

## Claims

1. Device for braking a rotary element comprising at least two distinct braking assemblies each having at least one brake disk (25, 26; 67, 68) having at least one friction surface or track (25c, 25d; 26c, 26d; 67b, 68b) and a friction lining (25a, 25b; 26a, 26b; 78, 79) associated with each of said tracks, said friction linings being applied to said friction tracks by the brake pistons (31a, 31b; 32c, 32d; 73, 74) of a brake calliper (27, 32; 71), a friction coefficient being effective in said region of contact between said track and said lining during braking, the materials in frictional contact of the first (25, 25a; 25b; 67, 78) of said assemblies, for example a ferrous metal for the brake disk and a sintered metal and ceramic mixture for the lining of said disk, being such that coefficient of friction decreases when the temperature of the friction track (25c, 25d; 67b) of the first assembly increases and the materials in frictional contact of the second (26, 26a, 26b; 68, 79) of said assemblies, for example carbon fibers for the disk and for the associated lining, being such that the coefficient of friction increases when the temperature of the friction track (26c, 26d; 68b) of the second assembly increases, characterized in that the brake pistons (31a, 31b; 32c, 32d; 73, 74) associated with the friction linings (25a, 25b, 26a, 26b; 78, 79) of each one of the braking assemblies are distinct, and are connected to distinct braking pressure generators, for example master cylinders (81b, 79b), that are actuated by a common actuating unit (82, 83), whereby for small actuating forces, only the brake piston (31a, 31b; 73) of the first assembly is subjected to a braking pressure that increases with the actuation force up to a limiting point of the actuating force, from which the said brake pistons of the first and of the second assemblies are simultaneously subjected to increasing braking pressures.

2. Braking device according to claim 1, characterized in that an actuating member (79a) of the second assembly cooperates with at least one bias spring (84) adapted to reduce the braking pressure of the second assembly with respect to that of the first assembly by a substantially constant amount.

3. Braking device according to claims 1 and 2, characterized in that the friction paths (25c, 25d) of the first assembly are made of cast iron and cooperates with friction linings (25a, 25b) made of composite material (for example, asbestos- or plastic material based), giving a friction coefficient that is stable but which rapidly decreases for high temperatures of the friction track, while the friction track of the second assembly is made of a fibrous material such as carbon fibers and cooperates with a friction lining (26a, 26b) made of a fibrous material of the same type and the friction coefficient of which increases when the temperature of the friction track increases.

4. Braking device according to claims 1 and 2, characterized in that the friction track (67b) of the first assembly is made of a ferrous material having high heat resistance such as a stainless steel of a permanent austenitic structure and cooperates with a friction lining (78) made of hard material such as sintered material, while the friction track (68b) of the second assembly is made of a fibrous material such as carbon fibers and cooperates with a friction lining (79) made of a friction material of the same type giving a friction coefficient that increases when the temperature of the friction track increases.

5. Braking device according to claims 3 and 4, characterized in that the friction tracks of the first and second assembly are formed on two disks (67, 68), respectively made of ferrous material and fibrous material, which are driven in simultaneous rotation by a group of splines borne by a support drum (65) integral in rotation with the rotary member (1) and are pressed against each other through the intermediary of a plane annular face (67a, 68a) inside a single caliper or yoke (71) or a single braking clamp adapted to simultaneously press one annular face (67b) of the disk made of ferrous material and one annular face (68b) of the disk made of fibrous material, so that the two disks are in a mutual thermal contact condition.

6. Braking device according to claim 5, characterized in that the disk made of ferrous material (67) is placed in the position enjoying the greatest cooling. i.e. generally, in the position the most exposed to the airflow of the vehicle, so as to facilitate retaining the heating of the disk made of fibrous material while limiting the drop of the friction coefficient of the other disk made of ferrous material. The paired disks made of different materials can be disposed in two pairs, each pressed by a caliper or yoke, in order to obtain double disks and double calipers brakes comprising, in fact, four brake disks.

7. Braking device according to claims 5 and 6, applied to motorcycle wheel braking, characterized in that the annular abuting sides (67a, 68a) of the disks (67, 68) are substantially located on the median plane (80) of the braked wheel (1).

8. Braking device according to claims 5 or 6, applied to motorcycle wheel braking, characterized in that the friction track (67b) of the disk (67) of the first braking assembly is located substantially on the median plane of the braked wheel.

9. Braking device according to claims 5 to 8, in which the two disks (67, 68) of the two distinct assemblies have substantially the same external and internal diameters, but different thicknesses, characterized in that the disk (68) of the second assembly has the greater thickness.

10. Device according to claim 9, characterized in that the disk (67) of the first assembly has a small thickness of 3-4 millimeters adapted to allow its rapid heating during braking.

11. Braking device according to claims 1 to 10, characterized in that the distinct pistons (31a, 31b; 32c, 32d; 73, 74) for pressing the friction linings (25a, 25b; 26a, 26b; 78, 79) have different diameters.

12. Braking device according to claim 11, characterized in that the brake piston or pistons (32c, 32d; 74) of the second assembly has/have the smallest diameter.

FIG.1

FIG.2

FIG.3

FIG.4